(19) Europäisches Patentamt
European Patent Office
Office européen des brevets

(11) **EP 2 124 176 A1**

(12) **EUROPEAN PATENT APPLICATION**
published in accordance with Art. 153(4) EPC

(43) Date of publication:
**25.11.2009 Bulletin 2009/48**

(51) Int Cl.:
***G06Q 10/00*** *(2006.01)*

(21) Application number: **07738727.2**

(22) Date of filing: **15.03.2007**

(86) International application number:
**PCT/JP2007/055277**

(87) International publication number:
**WO 2008/126182 (23.10.2008 Gazette 2008/43)**

(84) Designated Contracting States:
**AT BE BG CH CY CZ DE DK EE ES FI FR GB GR
HU IE IS IT LI LT LU LV MC MT NL PL PT RO SE
SI SK TR**

(71) Applicant: **Fujitsu Limited**
**Kawasaki-shi, Kanagawa 211-8588 (JP)**

(72) Inventor: **SASAGAWA, Fumiyoshi**
**Kawasaki-shi**
**Kanagawa 211-8588 (JP)**

(74) Representative: **Ward, James Norman**
**Haseltine Lake LLP**
**Lincoln House, 5th Floor**
**300 High Holborn**
**London WC1V 7JH (GB)**

(54) **TASK ANALYSIS PROGRAM AND TASK ANALYZER**

(57)     A workflow extractor means (13) generates workflow information having the set names of data sets arranged in chronological order, oldest first, for each business process. A transition information generator means (14) specifies a transition relation between two continuously updated data sets to generate transition information (14a). An important update extractor means (15) extracts update information indicating updates of important data items (12a), ..., and specifies a correspondence relation between a data set and an updated value. An impact level calculator means (16) calculates an impact level of each transition relation on business based on the number of appearances of the transition relation and the updated values corresponding to the data sets of the transition source and the transition destination, and outputs impact level information (16a).

FIG. 1

**Description**

Technical Field

The present invention is related to a program and apparatus for workflow analysis, and more particularly to a workflow analysis program and a workflow analysis apparatus for analyzing a flow of work based on the operational state of computer systems.

Background Art

Recent years, as using computers has become common to process data, more business activities need computer systems. For example, a company that sells commodities to customers uses computer systems for management of customer information, inventory management, order management, etc. As flows of work (hereinafter, referred to as workflows) using computer systems are complicated, workflow models are configured to clearly represent the workflows. The workflow models are ones that abstractly describe workflows for easy understanding, so that business managers and system administrators can intuitively confirm the workflows. In many cases, such workflow models are configured as part of design information when a computer system is to be set up.

By the way, it is demanded to especially monitor and scrutinize such business activities in all workflows that have high impact on the entire business. For example, a company may need to especially scrutinize past business activities which have high impact on their finances in order to provide enhanced reliability of financial reports. However, it is an overload for staff in charge to decide which business activities in workflows need to be monitored and scrutinized. This problem may not be resolved only by using workflow models because these models do not describe information for use in evaluating each individual business activity.

On the other hand, there is a known system called a job analysis system which automatically calculates an evaluation value of each individual business activity based on the information of workflows and the results of hearings and questionnaires (for example, refer to Patent Literature 1). In this system, first of all, a person in charge creates information representing workflows, such as workflow models, and gathers information from executives and some other related staff through hearings and questionnaires. Then, the person in charge enters the information of the workflows and the results of the hearings and questionnaires in the job analysis system. The job analysis system then carries out statistical processing based on the entered data to calculate an evaluation value of each individual business activity contained in the workflow models. Using such a job analysis system results that business activities which have high impact on the entire business can be easily recognized and the loads on the person in charge can be reduced.

Patent Literature 1: Japanese Laid-open patent Publication No. 2005-71113

Disclosure of Invention

Problems that the Invention is to Solve

However, the technique taught in the above Patent Literature 1 has a drawback that the evaluation results do not always reflect the details of the actual business activities because the statistical processing is carried out based on the results of hearings and questionnaires. This drawback arises if the number of cases to be dealt with and their scales (for example, a transaction amount) in the actual business activities are different from what the executives and the person in charge expect. Therefore, it is desirable that a more actual impact level can be calculated based on the operational state of computer systems.

This invention is made in view of the foregoing and intends to provide a program and apparatus for workflow analysis which are capable of more accurately evaluating the impact level of each individual business activity on the entire business by using the update information of representative data as information representing the operational state of computer systems.

Means for Solving the Problems

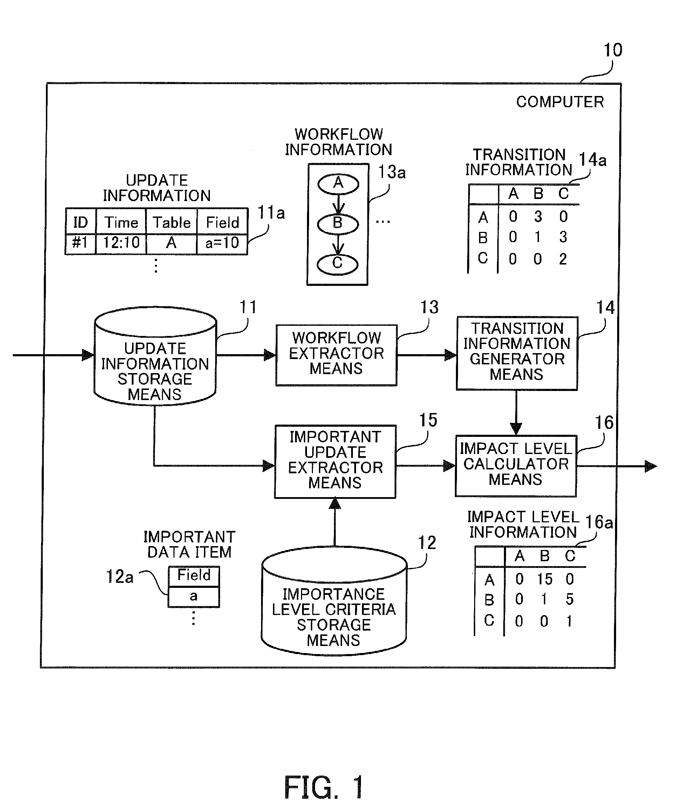

To solve the above problems, the present invention provides a workflow analysis program illustrated in FIG. 1. The workflow analysis program illustrated in FIG. 1 is designed to analyze a flow of work based on the operational state of computer systems. A computer 10 which executes the workflow analysis program includes an update information storage means 11, an importance level criteria storage means 12, a workflow extractor means 13, a transition information generator means 14, an important update extractor means 15, and an impact level calculator means 16.

The update information storage means 11 stores update information 11a, ..., each including an identifier uniquely identifying a business process involving updates of a plurality of data sets, an updated time of an updated data set, a set name of the updated data set, an item name and updated value of a data item updated in the updated data set. The importance level criteria storage means 12 stores a list of important data items 12a, ... which are considered highly important in business from among the data items contained in the data sets. The workflow extractor means 13 generates workflow information by arranging the set names of updated data sets in chronological order of updated time, oldest first, for each business process, based on the update information 11a, ... stored in the update information storage means 11. The transition information generator means 14 specifies a transition relation between two continuously updated data sets based on the workflow information 13a, ... generated by the workflow information extractor means 13, and generates transition information 14a indicative of the number of appearances of every transition relation. The important update extractor means 15 consults the importance level criteria storage means 12 to extract update information indicating updates of the important data items 12a, ... from among the update information 11a stored in the update information storage means 11, and specifies a correspondence relation between a data set and the updated value of an importance data item 12a, .... The importance level calculator means 16 acquires the transition information 14a generated by the transition information generator means 14 and the information of the correspondence relations specified by the important update extractor means 15, calculates an impact level of each transition relation on the business with a predetermined calculation method based on the number of appearances of the transition relation and the updated values corresponding to the data sets which are a transition source and a transition destination, and outputs impact level information 16a indicative of an impact level of every transition relation.

In the computer 10 which executes such a workflow analysis program, the workflow extractor means 13 generates workflow information having the set names of updated data sets arranged in chronological order of updated time, oldest first, for each business process. The transition information generator means 14 specifies a transition relation between two continuously updated data sets, and generates transition information 14a indicative of the number of appearances of every transition relation. The important update extractor means 15 extracts update information indicating updates of the important data items 12a, ..., and specifies a correspondence relation between a data set and the updated value of an important data item 12a, .... The impact level calculator means 16 calculates an impact level of each transition relation on business with a predetermined calculation method based on the number of appearances of the transition relation and the updated values corresponding to the data sets which are a transition source and a transition destination, and outputs the impact level information 16a indicative of the impact level of every transition relation.

Further, to solve the above problems, there is provided a workflow analysis apparatus for analyzing a flow of work based on the operational state of computer systems. The workflow analysis apparatus includes: an update information storage means which stores update information including an identifier uniquely identifying a business process involving updates of a plurality of data sets, an updated time of an updated data set, a set name of the updated data set, and an item name and updated value of a data item updated in the updated data set; a importance level criteria storage means which stores a list of important data items which are considered highly important in business from among the data items contained in the data sets; a workflow extractor means which generates workflow information by arranging the set names of updated data sets in chronological order of updated time, oldest first, for each business process based on the update information stored in the update information storage means; a transition information generator means which specifies a transition relation between two continuously updated data sets based on the workflow information generated by the workflow extractor means, and generates transition information indicative of the number of appearances of every transition relation; an important update extractor means which consults the importance level criteria storage means to extract update information indicating updates of the important data items from among the update information stored in the update information storage means, and specifies a correspondence relation between a data set and the updated value of an important data item; and an impact level calculator means which acquires the transition information generated by the transition information generator means and the information of the correspondence relations specified by the important update extractor means, calculates an impact level of each transition relation on the business with a predetermined calculation method by using the number of appearances of the transition relation and the updated values corresponding to the data sets which are a transition source and a transition destination, and outputs impact level information indicative of the impact level of every transition relation.

In such a workflow analysis apparatus, the workflow extractor means generates workflow information having the set names of updated data sets arranged in chronological order of updated time, oldest first, for each business process. The transition information generator means specifies a transition relation between two continuously updated data sets, and generates transition information indicative of the number of appearances of every transition relation. The important update extractor means extracts update information indicating updates of the important data items, and specifies a correspondence relation between a data set and the updated value of an important data item. The impact level calculator means calculates an impact level of each transition relation on business with a predetermined calculation method based on the number of appearances of the transition relation and the updated values corresponding to the data sets which are a transition source and a transition destination, and outputs the impact level information indicative of the impact level of every transition relation.

Advantages of the Invention

The present invention is designed to specify transition relations representing an order of updates between data sets by using data update information which is outputted from computer systems, and quantitatively obtain an impact level of each transition relation based on the number of appearances of the transition relation and the updated values of important data items. This makes it possible to more correctly specify business activities which have a high impact level on the entire business from workflows. In addition, the impact levels can be evaluated from various points of view by designating different data items as important data items depending on the situation.

The above and other objects, features and advantages of the present invention will become apparent from the following description when taken in conjunction with the accompanying drawings which illustrate preferred embodiments of the present invention by way of example.

Brief Description of the Drawings

[FIG. 1] A view illustrating an overview of one embodiment.
[FIG. 2] A view illustrating a system configuration according to the embodiment.
[FIG. 3] A view illustrating the hardware configuration of a workflow analysis device.
[FIG. 4] A functional block diagram of a workflow analysis device.
[FIG. 5] A view illustrating an example data structure of an update log file.
[FIG. 6] A view illustrating an example data structure of an update information table.
[FIG. 7] A view illustrating an example data structure of a control criteria table.
[FIG. 8] A flowchart of a procedure of an impact level calculation process.
[FIG. 9] A flowchart of a procedure of a workflow extraction process.
[FIG. 10] A view illustrating an example data structure of a workflow table.
[FIG. 11] A flowchart of a procedure of a controlled event extraction process.
[FIG. 12] A view illustrating an example data structure of a controlled event table.
[FIG. 13] A flowchart of a procedure of a transition table generation process.
[FIG. 14] A view illustrating an example data structure of an activity transition table.
[FIG. 15] A flowchart of a procedure of an impact level table generation process.
[FIG. 16] A view illustrating an example data structure of an activity impact level table.
[FIG. 17] A view illustrating an example data structure of an integrated activity impact level table.
[FIG. 18] A first view illustrating an example display screen of an analysis result.
[FIG. 19] A second view illustrating an example display screen of the analysis result.
[FIG. 20] A third view illustrating an example display screen of the analysis result.

Best Mode for Carrying out the Invention

A preferred embodiment of this invention will be described with reference to the accompanying drawings. First an overview of the invention and then a specific embodiment will be described.

FIG. 1 illustrates an overview of the embodiment. A computer 10 illustrated in FIG. 1 is designed to collect update information which is outputted from computer systems, and analyze workflows based on the collected update information. The computer 10 includes an update information storage means 11, an importance level criteria storage means 12, a workflow extractor means 13, a transition information generator means 14, an important update extractor means 15, and an impact level calculator means 16. These processing functions are realized by a predetermined workflow analysis program running on the computer 10, for example.

The update information storage means 11 stores collected update information 11a, .... Each update information 11a, ... includes an identifier uniquely identifying a business process carried out in the past, the updated time of an updated data set, the set name of the updated data set, and the item name and updated value of a data item updated in the data set. The business process includes updates of a plurality of data sets. A data set includes one or more data items, and may be a table or XML (eXtensive Markup Language) data in a relational database.

The importance level criteria storage means 12 stores a list of important data items 12a, ... which are considered highly important in business from among all data items. The important data items 12a, ... are previously designated by a user using the computer 10 in view of purposes of analysis or from the viewpoint of analysis. For example, to perform analysis from the viewpoint of finances, money-related data items may be designated in advance.

The workflow extractor means 13 generates workflow information 13a, ... for each business process based on the update information 11a, ... stored in the update information storage means 11. The workflow information 13a, ... is generated by arranging the set names of updated data sets in chronological order of updated time, oldest first. More specifically, the workflow extractor means 13 generates the workflow information 13a, ... by classifying the update information 11a, ... according to the identifiers of business processes, and sorting the update information for each classification in chronological order of updated time, oldest first.

The transition information generator means 14 specifies each transition relation between two continuously updated data sets based on the workflow information 13a, ... generated by the workflow extractor means 13. For example, consider a case where there is workflow information which includes a sequence of set names, "data set A", "data set B", and "data set C". In this case, two transition relations are specified, one having "data set A" as a transition source and "data set B" as a transition destination, and the other having "data set B" as a transition source and "data set C" as a transition destination. Then, the transition information generator means 14 generates transition information 14a which indicates the number of appearances of every transition relation. The transition information 14a is represented, for example, in two-dimensional tabular form. In this connection, the transition relations include a relation in which a transition source and a transition destination are the same data set, in other words, a relation in which the same data set is continuously updated.

The important update extractor means 15 extracts update information indicating updates of the important data items 12a, ..., from among the update information 11a, ... stored in the update information storage means 11, and specifies each correspondence relation between a data set and the updated value of an importance data item 12a, .... This results in specifying the scale (for example, the number of goods or an amount of money) of each important update process performed on the data sets.

The impact level calculator means 16 acquires the transition information 14a generated by the transition information generator means 14 and the information of the correspondence relations specified by the important update extractor means 15. Then the impact level calculator means 16 calculates an impact level of each transition relation on business with a predetermined calculation method by using the number of appearances of the transition relation and the updated values corresponding to the data sets which are a transition source and a transition destination. In the case where the updated values of important data items are all numerical values, for example, an equation with the number of appearances and updated values as variables can be employed. Even if some of updated values of the important data items are not numerical values, such an equation can be used, provided that each updated value which is not numerical value is converted into a numerical value according to a predetermined conversion rule. Then, the impact level calculator means 16 outputs impact level information 16a indicative of the impact level of every transition relation.

An order of the processes of the workflow extractor means 13, the transition information generator means 14, and the important update extractor means 15 is changeable. For example, either of the processes of the workflow extractor means 13 and the important update extractor means 15 may be performed first or they may be performed in parallel.

In such a computer 10, the workflow extractor means 13 generates workflow information 13a, ... having the set names of updated data sets arranged in chronological order of updated time, oldest first, for each business process. The transition information generator means 14 specifies each transition relation representing a relation between two continuously updated data sets, and generates transition information 14a indicative of the number of appearances of every transition relation. The important update extractor means 15 extracts update information indicating updates of the important data items 12a, ..., and specifies each correspondence relation between a data set and the updated value of an important data item 12a, .... The impact level calculator means 16 calculates an impact level of each transition relation on business with a predetermined calculation method by using the number of appearances of the transition relation and the updated values corresponding to the data sets which are a transition source and a transition destination, and outputs the impact level information 16a indicative of an impact level of every transition relation.

It can be considered that many business activities in the workflows are completed by updating data sets. Therefore, the impact level of a transition relation represents an impact level of a business activity, which is specified by the data sets which are the transition source and the transition destination.

Therefore, business activities with high impact on the entire business can be accurately detected from the workflows. In addition, by desirably designating data items as important data items, an impact level can be evaluated from various points of view. For example, by designating money-related data items as important data items, an impact level on finances can be evaluated.

The embodiment will now be described in detail with reference to the accompanying drawings.

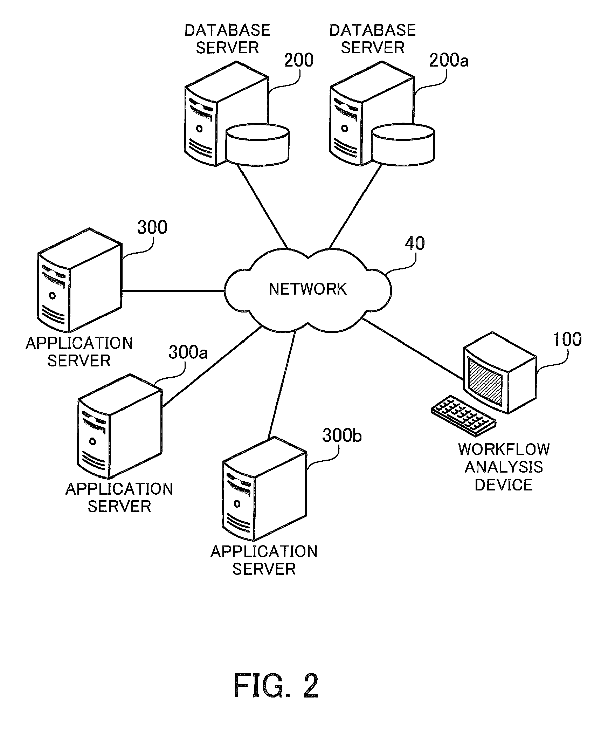

FIG. 2 illustrates the system configuration according to the embodiment. A workflow analysis system illustrated in FIG. 2 is designed to analyze workflows based on the update information of databases which is outputted from a database management system.

The workflow analysis system according to the embodiment includes a workflow analysis device 100, database servers 200 and 200a, application servers 300, 300a, and 300b, and a network 40. The workflow analysis device 100, the database servers 200 and 200a, and the application servers 300, 300a, and 300b are connected to the network 400 so that they can mutually communicate with one another.

The workflow analysis device 100 is a computer which analyzes a workflow in response to a command made by a user, and displays an analysis result. The workflow analysis device 100 acquires update log files stored in the database servers 200 and 200a via the network 40. The update log file is a file which contains at least one piece of update information. Then the workflow analysis device 100 analyzes the update information contained in the acquired update log files to estimate workflows. In addition, the workflow analysis device 100 specifies, from the workflows, business activities that need to be especially monitored and scrutinized in the internal control. In this embodiment, the internal control is especially performed for financial reports.

The database servers 200 and 200a are computers which execute programs to realize a database management system. The database management system manages application data to be used by the application programs executed on the application servers 300, 300a, and 300b. The database management system manages the application data in tabular form, and performs a search process and an update process on the application data in response to requests from application programs. When application data is updated, the database management system adds update information in an update log file. Update log files are stored in the corresponding database servers 200 and 200a.

The application servers 300, 300a, and 300b are computers which perform application programs specified by commands made by users. The application servers 300, 300a, and 300b are used by different departments. More specifically, the application server 300 is used by the "department A" while the application server 300a is used by the "department B". The application server 300b is used by the "department C". The application programs executed on the application servers 300, 300a, and 300b access the database servers 200 and 200a via the network 40 to use the application data in accordance with necessity.

In this embodiment, the workflow analysis device 100 is provided as a device for analyzing workflows. Alternatively, the functions of the workflow analysis device 100 may be realized by the database servers 200 and 200a. These functions also may be realized by the business servers 300, 300a and 300b.

Now the hardware configurations of the workflow analysis device 100, the database servers 200 and 200a, and the application servers 300, 300a, and 300b will be described.

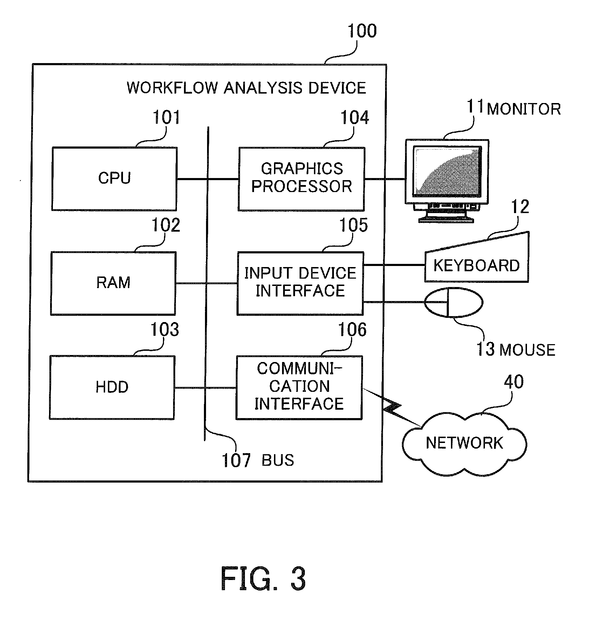

Fig. 3 illustrates the hardware configuration of a workflow analysis device. The workflow analysis device 100 is entirely controlled by a CPU (Central Processing Unit) 101. Connected to the CPU 101 via a bus 107 are a RAM (Random Access Memory) 102, a Hard Disk Drive (HDD) 103, a graphics processor 104, an input device interface 105, and a communication interface 106.

The RAM 102 temporarily stores at least part of an OS program and application programs to be executed on the CPU 101. The RAM 102 also temporarily stores at least part of various data for CPU processing. The HDD 103 stores the OS program and the application programs. The HDD 103 also stores various data for CPU processing.

The graphics processor 104 is connected to a monitor 11, and is designed to display images on the monitor 11 under the control of the CPU 101. The input device interface 105 is connected to a keyboard 12 and a mouse 13, and is designed to transfer signals from the keyboard 12 and the mouse 13 to the CPU 101 via the bus 107. The communication interface 106 is connected to the network 40.

The database servers 200 and 200a, and the business servers 300, 300a, and 300b have the same hardware configuration as the workflow analysis device 100. The above-described hardware configuration realizes the processing functions of this embodiment.

Now the module configuration of the workflow analysis device 100 will be described.

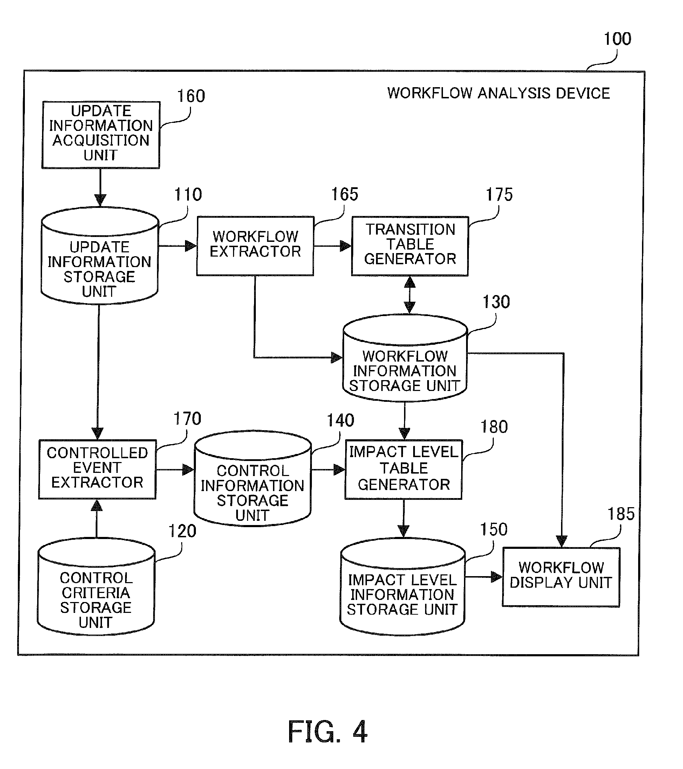

FIG. 4 is a functional block diagram of the workflow analysis device. The workflow analysis device 100 includes an update information storage unit 110, a control criteria storage unit 120, a workflow information storage unit 130, a control information storage unit 140, an impact level information storage unit 150, an update information acquisition unit 160, a workflow extractor 165, a controlled event extractor 170, a transition table generator 175, an impact level table generator 180, and a workflow display unit 185.

The update information storage unit 110 stores update information which is outputted from the database management system. The update information is information which is created every time a table in a database is updated. A table update process includes addition, update, and deletion of records. One or more tables are updated in one-time business process. In this connection, in the update information storage unit 110, update information on an update process is classified in and stored for a corresponding department which performed the update process. More specifically, the update information is classified in and separately stored for the "department A", "department B", or "department C".

The control criteria storage unit 120 stores control criteria information. The control criteria information indicates fields which especially need to be monitored and scrutinized in the internal control relating to financial reports among fields contained in the table. More specifically, this information indicates fields which are significant in the entire business among money-related fields. The control criteria information is previously generated by an administrator of the workflow analysis device 100. In this description, it is assumed that fields of the same name contained in some separate tables have the same meaning.

The workflow information storage unit 130 stores workflow information. The workflow information represents workflows. More specifically, this information includes a sequence of tables updated in a business process and the number of appearances of the sequence. This is because, in works using computer systems, a sequence of data updates is considered to most accurately represent a workflow. The workflow information is created in the course of the analysis process. In addition, in the workflow information storage unit 130, workflow information is classified in and stored for a corresponding department.

The workflow information storage unit 130 also stores an activity transition table for each department. The activity transition table is a table listing the number of appearances of every transition relation. A transition relation is a relation between two continuously updated tables. For example, the activity transition table indicates that a transition relation in which a "purchase request" table was updated and then an "arrival of goods" table was updated appeared 100 times. The activity transition table is generated in the course of the analysis process.

The control information storage unit 140 stores controlled event information. The controlled event information is obtained by extracting information relating to update processes in which fields specified by the control criteria information were updated from among the update information stored in the update information storage unit 110. The controlled event information is generated in the course of the analysis process. In this connection, in the control information storage unit 140, the controlled event information is classified in and stored for a corresponding department.

The impact level information storage unit 150 stores an activity impact level table for each department. The activity impact level table lists the impact levels of transition relations on the entire business. An impact level is obtained through the predetermined calculation method, and is represented in numeral. The impact level information storage unit 150 also stores an integrated activity impact level table. The integrated activity impact level table is obtained by aggregating the activity impact level tables of the departments. The activity impact level tables for the respective departments and the integrated activity impact level table are generated as a result of the analysis process.

The update information acquisition unit 160 accesses the database servers 200 and 200a via the network 40 at preset time intervals to acquire the update log files. Then, the update information acquisition unit 160 determines whether or not the acquired log file has newly added update information, which did not exist in the previously acquired update log file. Whether such update information exists or not is determined by comparing the acquisition time of the previous update log file and the updated time of the new update information.

If new update information is detected, the update information acquisition unit 160 extracts the update information from the update log file, and stores it in the update information storage unit 110. To do so, the update information acquisition unit 160 determines an entity which performed the update process indicated by the update information, that is, determines a department based on the update information, and classifies and stores the update information for the department.

When the user of the workflow analysis device 100 enters a command to start the analysis process, the workflow extractor 165 generates workflow information based on the update information stored in the update information storage unit 110. More specifically, the workflow extractor 165 classifies the update information according to business process, and generates table sequence information by arranging the updated tables in chronological order, oldest first, for each business process. Further, the workflow extractor 165 aggregates the table sequence information to calculate the number of appearances of each table sequence. Then, the workflow extractor 165 stores the generated workflow information in the workflow information storage unit 130. This process is independently performed for each department.

When the command to start the analysis process is made, the controlled event extractor 170 generates controlled event information based on the update information stored in the update information storage unit 110 and the control criteria information stored in the control criteria storage unit 120. More specifically, the controlled event extractor 170 extracts information relating to update processes in which fields specified by the control criteria information were updated from the update information. Then, the controlled event extractor 170 stores the generated controlled event information in the control information storage unit 140. This process is independently performed for each department.

After the workflow extractor 165 completes its processes, the transition table generator 175 generates an activity transition table based on the workflow information stored in the workflow information storage unit 130. More specifically, the transition table generator 175 dissolves a table sequence represented by the workflow information into one or more transition relations, and counts the number of appearances of each transition relation. Then, the transition tale generator 175 stores the generated activity transition table in the workflow information storage unit 130. This process is independently performed for each department.

When the activity transition table is stored in the workflow information storage unit 130 and the controlled event information is stored in the control information storage unit 140, the impact level table generator 180 generates an activity impact level table for each department based on the activity transition tables and the controlled event information. More specifically, the impact level table generator 180 calculates an impact level of each transition relation based on the number of appearances of the transition relation described in the activity transition tables and the controlled event information relating to the tables which are a transition source and a transition destination. The calculation method for the impact level will be described in detail later.

Then, the impact level table generator 180 stores the activity impact level table for each department in the impact level information storage unit 150. In addition, the impact level table generator 180 aggregates the activity impact level tables of the departments to generate an integrated activity impact level table, and stores it in the impact level information storage unit 150.

When the integrated activity impact level table is stored in the impact level information storage unit 150, the workflow display unit 185 displays the analysis result on the monitor 11. More specifically, the workflow display unit 185 generates a workflow model based on the workflow information stored in the workflow information storage unit 130, reflects the contents of the integrated activity impact level table in the workflow model, and visually displays the model. In addition, the workflow display unit 185 changes the way of display in response to a user input.

Then, the data structures of the update information and the control criteria information to be used in the impact level calculation process will be described.

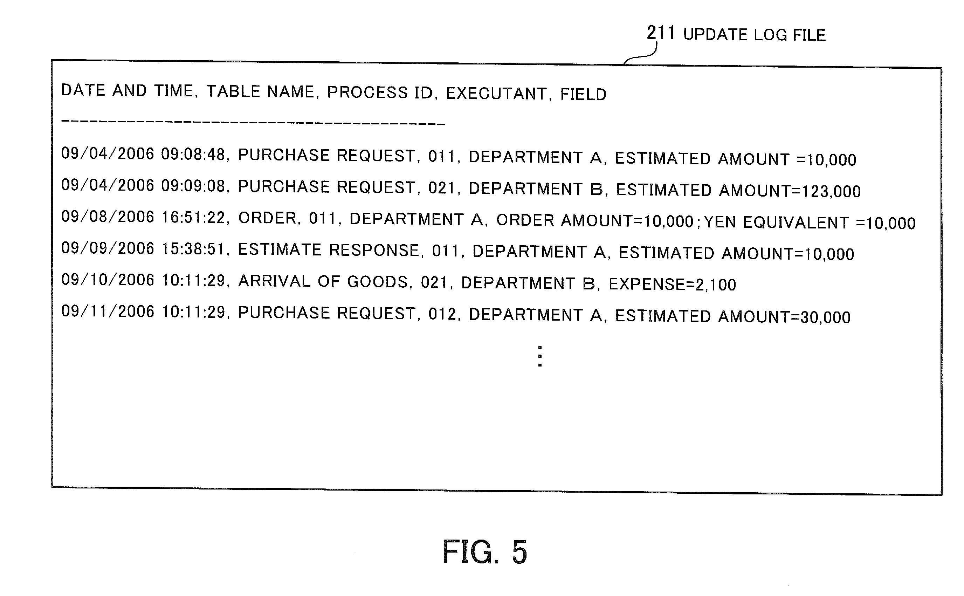

FIG. 5 illustrates an example data structure of an update log file. The update log file 211 illustrated in FIG. 5 is acquired by the update information acquisition unit 160 from the database server 200. The update log file 211 contains items for date and time, table name, process ID, executant, and field. A comma (",") is inserted between items. Information items arranged in a row are associated with one another.

The date and time item indicates a date and time of an update process, and for example, "Month/Day/Year Hours:Minutes:Seconds" are set. The table name item indicates the table name of an updated table. The process ID item indicates an identification number uniquely identifying a business process. This identification number is automatically assigned to each business process by an application program. The executant item indicates the title of a department which is an entity which performed the business process. More specifically, "department A", "department B", or "department C" is set. The field item indicates a combination of a field name and its updated value. If there are some updated fields, a semicolon (";") is inserted between combinations.

In the update log file 211, update information is appropriately added by the database management system executed on the database server 200. For example, information including a date and time of "09/04/2006 09:08:48", a table name of "purchase request", a process ID of "011", an executant of "department A", and a field of "estimated amount=10,000" was added. This means that a record having a value of "10,000" in the "estimated amount" field is added to the "purchase request" table or that a value in the "estimated amount" field was updated to "10,000" in some records of the "purchase request" table.

In this connection, an update log file which is obtained from the database server 200a has the same data structure as the update log file 211.

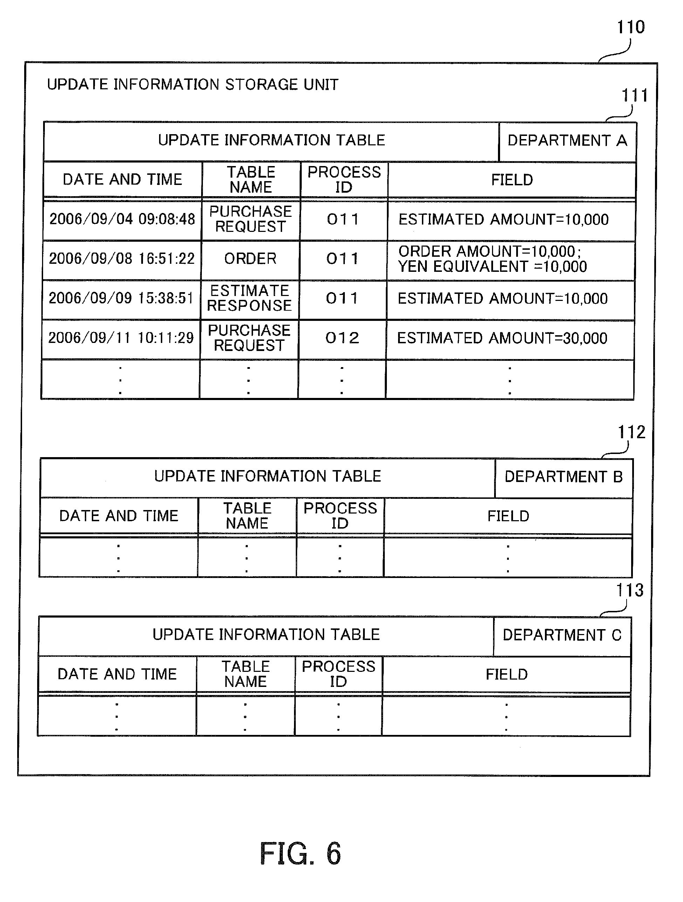

FIG. 6 illustrates an example data structure of update information tables. The update information tables 111, 112, and 113 illustrated in FIG. 6 are stored in the update information storage unit 110. The update information tables 111, 112, and 113 correspond to the "department A", "department B", and "department C", respectively.

Each update information table 111, 112, 113 has items for date and time, table name, process ID, and field. Information items arranged in a row are associated with one another. The date and time item, the table name item, the process ID item, and the field item correspond to the respective items with same names of the update log file.

If the acquired update log file includes newly added update information, the update information acquisition unit 160 confirms the value of the executant item in the update log file, and adds the information in a corresponding update information table 111, 112, or 113. More specifically, if the executant is "department A", the information is added to the update information table 111. If the executant is "department B", the information is added to the update information table 112. If the executant is "department C", the information is added to the update information table 113.

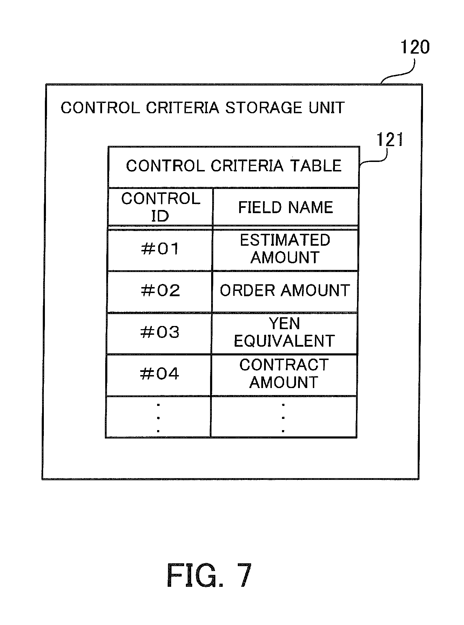

FIG. 7 illustrates an example data structure of a control criteria table. The control criteria table 121 is stored in the control criteria storage unit 120. The control criteria table 121 has items for control ID and field name. Information items arranged in a row are associated with each other to form control criteria information.

The control ID item indicates an identification code uniquely identifying a field which especially needs to be monitored and scrutinized in the internal control. The field name item indicates the filed name of a field corresponding to the control ID.

The control criteria information stored in the control criteria table 121 is previously registered by the administrator of the workflow analysis device 100. For example, information including a control ID of "#01" and a field name of "estimated amount" is registered.

The next description is about how the workflow analysis device 100 configured as above and provided with the above data structures performs the impact level calculation process based on the update information and the control criteria information. The impact level calculation process is performed when a user of the workflow analysis device 100 enters a command to start analysis.

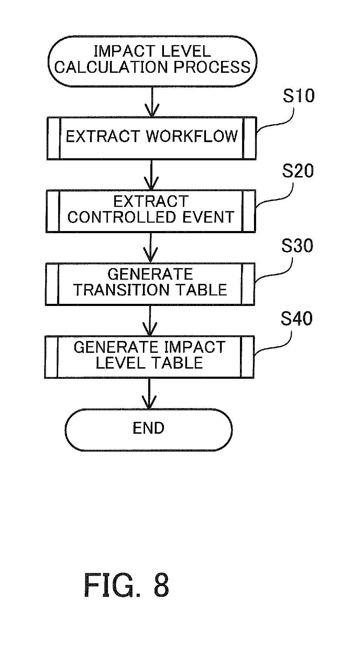

FIG. 8 is a flowchart of the procedure of an impact level calculation process. This procedure will be described step by step.

(Step S10) The workflow extractor 165 acquires update information from the update information storage unit 110, and generates and stores workflow information in the workflow information storage unit 130.

(Step S20) The controlled event extractor 170 acquires the update information from the update information storage unit 110, also acquires the control criteria information from the control criteria storage unit 120, and generates and stores controlled event information in the control information storage unit 140.

(Step S30) The transition table generator 175 acquires the workflow information from the workflow information storage unit 130, and generates and stores an activity transition table for each department in the workflow information storage unit 130.

(Step S40) The impact level table generator 180 acquires the activity transition tables from the workflow information storage unit 130, also acquires the controlled event information from the control information storage unit 140, and generates and stores an activity impact level table for each department in the impact level information storage unit 150. In addition, the impact level table generator 180 aggregates the activity impact level tables of the departments to generate and store an integrated activity impact level table in the impact level information storage unit 150.

Now, the workflow extraction process at step S10, the controlled event extraction process at step S20, the transition table generation process at step S30, and the impact level table generation process at step S40 will be described in detail.

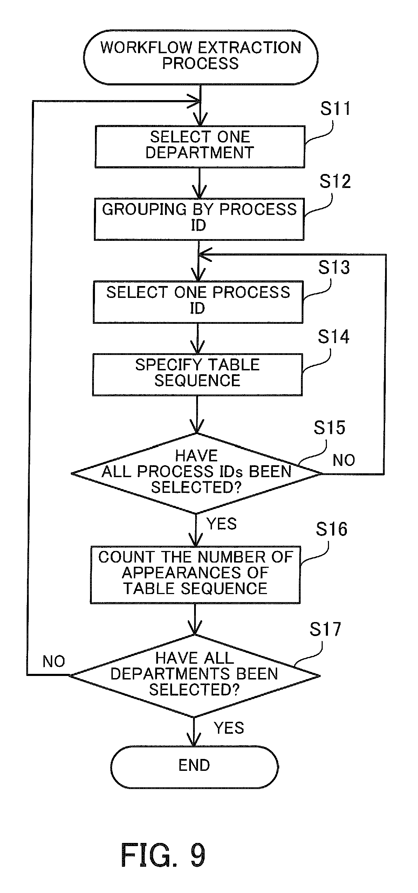

FIG. 9 is a flowchart of the procedure of a workflow extraction process. This procedure of FIG. 9 will be described step by step.

(Step S11) The workflow extractor 165 selects an unselected one of "department A", "department B", and "department C". Then, the workflow extractor 165 acquires the update information table corresponding to the selected department from the update information storage unit 110. In addition, the workflow extractor 165 generates a workflow table corresponding to the selected department in the workflow information storage unit 130.

(Step S12) The workflow extractor 165 groups all of the update information contained in the update information table acquired at step S11, by process ID. For example, update information with a process ID of "011" is grouped.

(Step S13) The workflow extractor 165 selects an unselected process ID of the process IDs of the groups generated at step S12.

(Step S14) The workflow extractor 165 sorts the update information corresponding to the process ID selected at step S13, in chronological order of updated time, oldest first. Then, the workflow extractor 165 arranges the table names included in the update information in the same order.

(Step S15) The workflow extractor 165 determines whether all of the process IDs have been selected at step S13 or not. If all of the process IDs have been selected, then the procedure goes on to step S16. If there is any unselected process ID, then the procedure goes back to step S13.

(Step S16) The workflow extractor 165 aggregates sequences of table names obtained at step S14 to count the number of appearances of a sequence of same table names. Then, the workflow extractor 165 stores workflow information including a sequence of table names and the number of appearances of the sequence, in the workflow table generated at step S11.

(Step S17) The workflow extractor 165 determines whether all of the departments have been selected at step S11 or not. If all of the departments have been selected, then the procedure is completed. If there is any unselected department, then the procedure goes back to step S11.

As described above, the workflow extractor 165 groups the update information by process ID, and sorts the update information in chronological order of updated time, oldest first, for each group. Then, the workflow extractor 165 specifies a sequence of table names arranged in the same order, and stores the workflow information including the sequence of table names and the number of appearances of the sequence in the workflow table generated in the workflow information storage unit 130. This process is performed for each department. Accordingly, a workflow table for each department is generated in the workflow information storage unit 130.

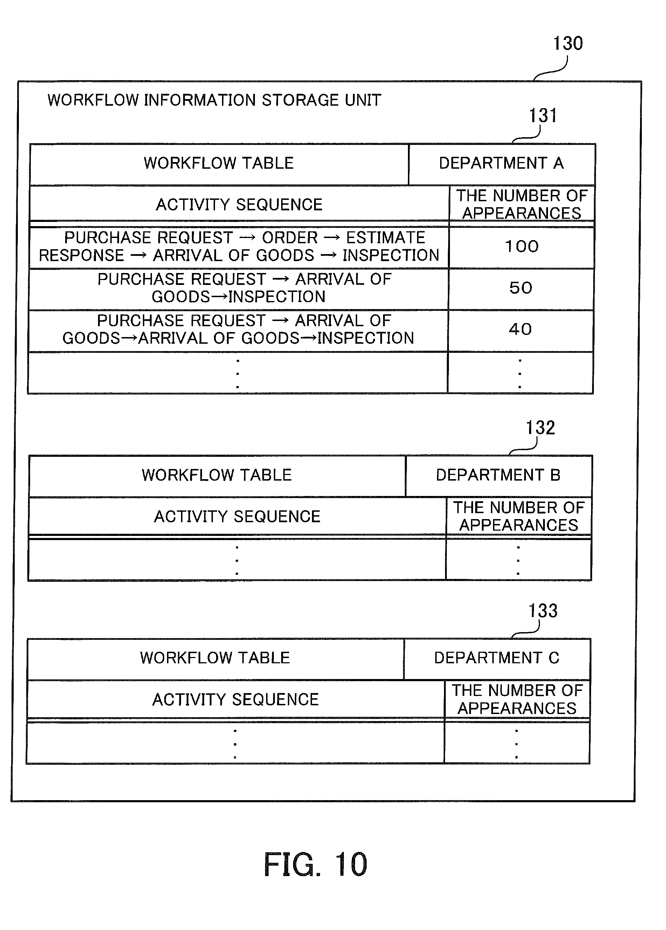

FIG. 10 illustrates an example data structure of workflow tables. The workflow tables 131, 132, and 133 illustrated in FIG. 10 are stored in the workflow information storage unit 130. The workflow tables 131, 132, and 133 correspond to the "department A", "department B", and "department C", respectively.

Each workflow table 131, 132, 133 has items for activity sequence and the number of appearances. Information items arranged in a row are associated with each other to form workflow information. The activity sequence item indicates a character string with a plurality of table names connected by an arrow. An activity means an update process performed on one table by an application program. Therefore, a sequence of table names represents an order of executing activities. The number of appearances item has a numerical value representing the number of appearances of an activity sequence. In the workflow tables 131, 132, and 133, workflow information is added by the workflow extractor 165. For example, information including an activity sequence of "purchase request → order → estimate response → arrival of goods → inspection" and the number of appearances of "100" is added.

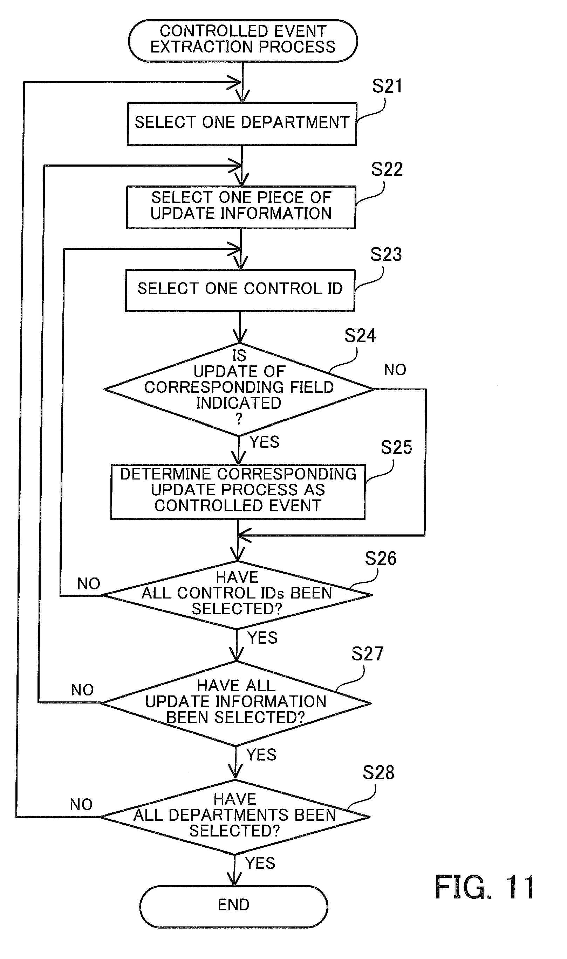

FIG. 11 is a flowchart of the procedure of a controlled event extraction process. This procedure of FIG. 11 will be described step by step.

(Step S21) The controlled event extractor 170 selects an unselected one of "department A", "department B", and "department C". Then, the controlled event extractor 170 acquires the update information table corresponding to the selected department from the update information storage unit 110. In addition, the controlled event extractor 170 acquires the control criteria table 121 from the control criteria storage unit 120.

(Step S22) The controlled event extractor 170 selects an unselected one of the update information contained in the update information table acquired at step S21.

(Step S23) The controlled event extractor 170 selects an unselected one of the control IDs contained in the control criteria table acquired at step S21. In addition, the control event extractor 170 generates a controlled event table corresponding to the department selected at step S21 and the selected control ID in the control information storage unit 140.

(Step S24) The controlled event extractor 170 determines whether or not the update information selected at step S22 indicates that the field corresponding to the control ID selected at S23 was updated. If yes, then the procedure goes on to step S25. If not, then the procedure goes on to step S26.

(Step S25) The controlled event extractor 170 determines the update process indicated by the update information selected at step S22 as a controlled event, which especially needs to be monitored and scrutinized. Then, the controlled event extractor 170 extracts the date and time, the table name, and the updated value of a field corresponding to the control ID selected at step S23, from the update information selected at step S22, and adds them as controlled event information in the controlled event table generated at step S23.

(Step S26) The controlled event extractor 170 determines whether all of the control IDs have been selected at step 23 or not. If all of the control IDs have been selected, then the procedure goes on to step S27. If there is any unselected control ID, then the procedure goes back to step S23.

(Step S27) The controlled event extractor 170 determines whether all of the update information have been selected at step S22 or not. If all of the update information have been selected, then the procedure goes on to step S28. If there is any unselected update information, then the procedure goes back to step S22.

(Step S28) The controlled event extractor 170 determines whether all of the departments have been selected at step S21 or not. If all of the departments have been selected, then the procedure is completed. If there is any unselected department, then the procedure goes back to step S21.

As described above, the controlled event extractor 170 determines update processes in which fields corresponding to the control IDs were updated, as controlled events out of the update processes indicated by the update information. Then, the controlled event extractor 170 stores the controlled event information in the controlled event table generated for each control ID in the control information storage unit 140. This process is performed for each department. Accordingly, the controlled event table for each department and each control ID is generated in the control information storage unit 140.

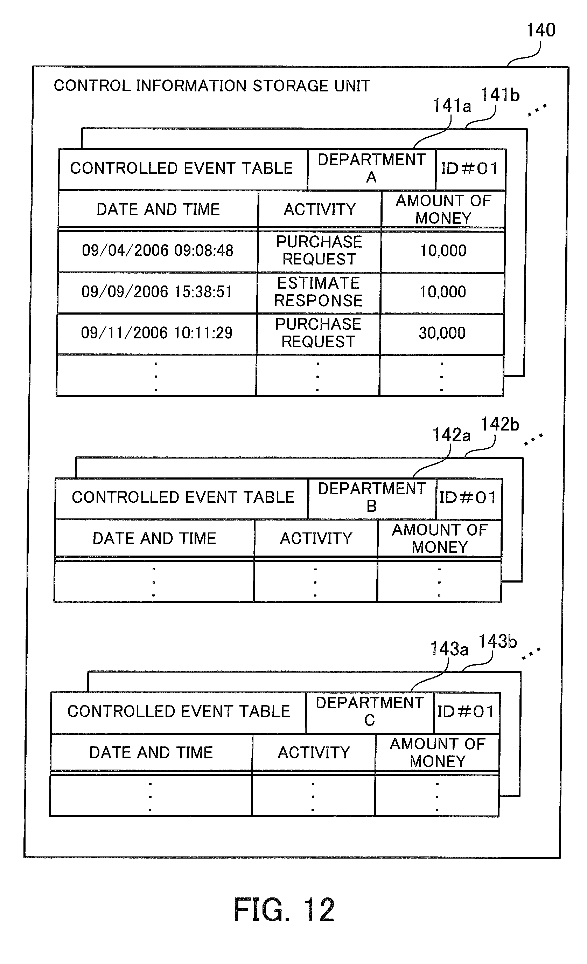

FIG. 12 illustrates an example data structure of controlled event tables. The controlled event tables 141a, 141b, ..., 142a, 142b, ..., 143a, 143b, ... as shown in FIG. 12 are stored in the control information storage unit 140.

The controlled event tables 141a, 141b, ... correspond to the "department A". The controlled event tables 142a, 142b, ... correspond to the "department B". The controlled event tables 143a, 143b, ... correspond to the "department C". Out of these, the controlled event tables 141a, 142b, and 143a correspond to a control ID "#01", and the controlled event tables 141b, 142b, and 143b correspond to a control ID "#02".

Each of the controlled event tables 141a, 141b, ..., 142a, 142b, ...., 143a, 143b, ... has items for date and time, activity, and amount of money. Information items arranged in a row are associated with one another to form controlled event information.

The date and time item corresponds to the date and time item of update information. The activity item corresponds to the table name item of the update information. The amount of money item indicates an updated value of a field corresponding to the controlled ID. The reason why the item name is "amount of money" is that the updated values of money-related fields are ones that are to be extracted.

In the controlled event tables 141a, 141b, ..., 142a, 142b, ...., 143a, 143b, ..., controlled event information is added by the controlled event extractor 170. For example, information including a date and time of "09/04/2006" and an activity of "purchase request", and an amount of money of "10,000" is added.

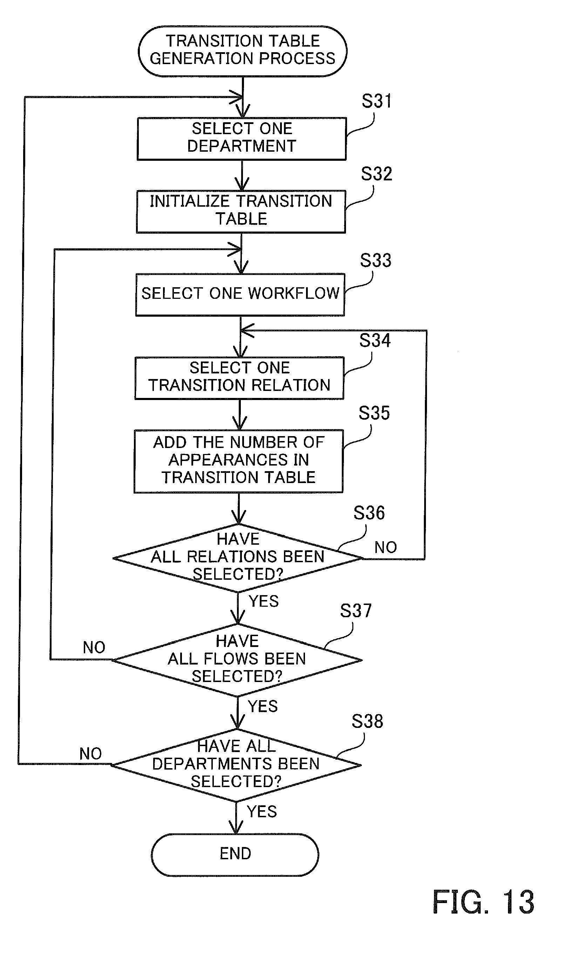

FIG. 13 is a flowchart of the procedure of a transition table generation process. This procedure of FIG. 13 will be described step by step.

(Step S31) The transition table generator 175 selects an unselected one of the "department A", "department B", and "department C". Then the transition table generator 175 acquires the work information table corresponding to the selected department from the workflow information storage unit 130.

(Step S32) The transition table generator 175 generates an activity transition table corresponding to the department selected at step S31, initializes the number of appearances of each transition relation to zero, and stores the table in the control information storage unit 140.

(Step S33) The transition table generator 175 selects an unselected one of the workflow information contained in the workflow table acquired at step S31, and specifies an activity sequence.

(Step S34) The transition table generator 175 selects an unselected one of the transition relations included in the activity sequence specified at step S33.

(Step S35) The transition table generator 175 adds the number of appearances of workflow information selected at step S33 to the value corresponding to the transition relation selected at step S34 in the activity transition level table.

(Step S36) The transition table generator 175 determines whether all of the transition relations included in the activity sequence have been selected or not at step S34. If all of the transition relations have been selected, then the procedure goes on to step S37. If there is any unselected transition relation, then the procedure goes back to step S34.

(Step S37) The transition table generator 175 determines whether all of the workflow information have been selected at step S33 or not. If all of the workflow information have been selected, then the procedure goes on to step S38. If there is any unselected workflow information, then the procedure goes back to step S33.

(Step S38) The transition table generator 175 determines whether all of the departments have been selected at step S31 or not. If all of the departments have been selected, then the procedure is completed. If there is any unselected department, then the procedure goes back to step S31.

As described above, the transition table generator 175 dissolves the activity sequence indicated by the workflow information to count the number of appearances of each transition relation, and contains it in the activity transition table generated in the control information storage unit 140. This process is performed for each department. Accordingly, the activity transition table for each department is generated in the workflow information storage unit 130.

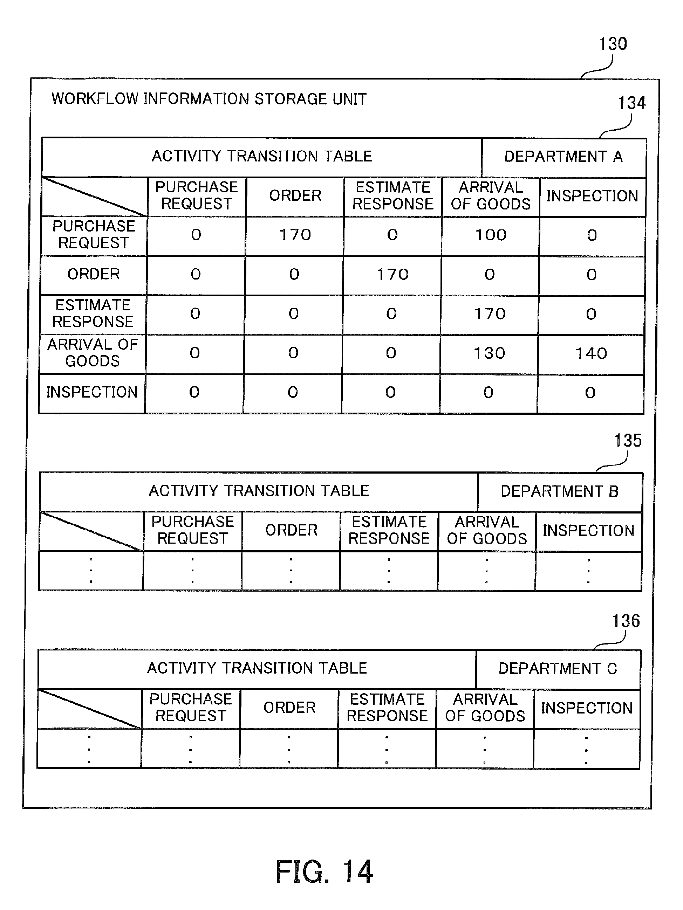

FIG. 14 illustrates an example data structure of activity transition tables. The activity transition tables 134, 135, and 136 illustrated in FIG. 14 are stored in the workflow information storage unit 130. The activity transition tables 134, 135, and 136 correspond to "department A", "department B", and "department C", respectively.

In the activity transition tables 134, 134, and 135, table names corresponding to activities of transition sources are listed in line, and table names corresponding to activities of transition destinations are listed in a row. A crossing column of a transition source activity and a transition destination activity contains a value which is indicative of the number of appearances of the transition relation. The values in the activity transition tables 134, 135, and 135 are set by the transition table generator 175. For example, "170" is set as the number of appearances of a transition relation with a transition source of "purchase request" and a transition destination of "order".

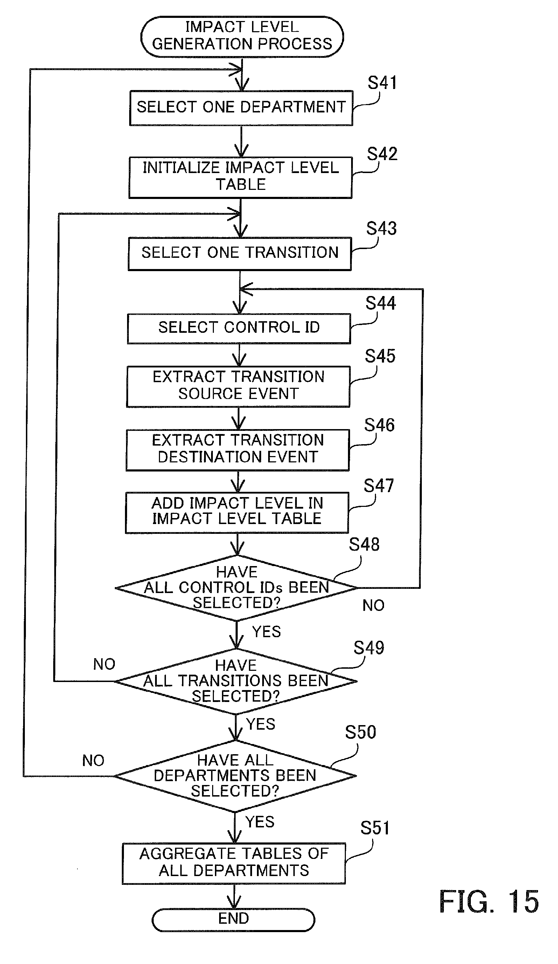

FIG. 15 is a flowchart of the procedure of an impact level table generation process. This procedure of FIG. 15 will be described step by step.

(Step S41) The impact level table generator 180 selects an unselected one of "department A", "department B", and "department C". Then, the impact level table generator 180 acquires an activity transition tale corresponding to the selected department from the workflow information storage unit 130.

(Step S42) The impact level table generator 180 generates an activity impact level table corresponding to the department selected at step S41, initializes the impact levels of all transition relations to zero, and stores the table in the impact level information storage unit 150.

(Step S43) The impact level generator 180 selects one transition relation which has the number of appearances greater than "0" and has not been selected, from among the transition relations included in the activity transition table acquired at step S41.

(Step S44) The impact level table generator 180 selects an unselected one of the control IDs. Then, the impact level table generator 180 acquires a controlled event table corresponding to the department selected at step S41 and the selected control ID from the control information storage unit 140.

(Step S45) The impact level table generator 180 acquires controlled event information corresponding to the transition source activity of the transition relation selected at step S43, from the controlled event table acquired at step S44.

(Step S46) The impact level table generator 180 acquires controlled event information corresponding to the transition destination activity of the transition relation selected at step S43, from the controlled event table acquired at step S44.

(Step S47) The impact level table generator 180 calculates the predetermined calculation by substituting the number of appearances of the transition relation selected at step S43, an amount of money included in the controlled event information acquired at step S45, and an amount of money included in the controlled event information acquired at step S46 to corresponding variables. The calculation method here will be described later. Then, the impact level table generator 180 adds the calculation result to the value corresponding to the selected relation selected at step S43 in the activity impact level table.

(Step S48) The impact level table generator 180 determines whether all of the control IDs have been selected at step S44 or not. If all of the control IDs have been selected, then the process proceeds to step S49. If there is any unselected control ID, then the procedure goes back to step S44.

(Step S49) The impact level table generator 180 determines whether all of the transition relations having the number of appearances greater than "0" have been selected at step S43. If all of such transition relations have been selected, then the process proceeds to step S50. If there is any unselected transition relation, then the procedure goes back to step S43.

(Step S50) The impact level table generator 180 determines whether all of the departments have been selected at step S41 or not. If all of the departments have been selected, then the process proceeds to step S51. If there is any unselected department, then the procedure goes back to step S41.

(Step S51) The impact level table generator 180 aggregates the activity impact level tables of the departments to generate an integrated activity impact level table. More specifically, the impact level table generator 180 adds up the values of impact levels described in the activity impact level tables of the departments with respect to each transition relation. Then, the impact level table generator 180 stores the integrated activity impact level table in the impact level information storage unit 150.

As described above, the impact level table generator 180 calculates the impact level of each transition relation based on the number of appearances of the transition relation and the updated values in the update processes before and after the transition, and sets it in the activity impact level table generated in the impact level information storage unit 150. This process is performed for each department. In addition, the impact level table generator 180 aggregates the activity impact level tables of the departments to generate an integrated activity impact level table, and stores it in the impact level information storage unit 150. Accordingly, in the impact level information storage unit 150, the activity impact level tables for the respective departments and the integrated activity impact level table are stored.

There are various calculation methods that can be used at step S47. Two examples are as follows.

First calculation: impact level = coefficient × (a total of absolute values of updated values of a transition source + a total of absolute values of updated values of a transition destination) × the number of appearances

Second calculation: impact level = first coefficient × (a total of updated values of a transition source + a total of updated values of a transition destination) × the number of appearances + second coefficient × a total of the updated values of the transition source × a total of the updated values of the transition destination × the number of appearances

In the first calculation, the absolute values of amounts of money corresponding to a transition source activity and a transition destination activity are independently calculated, and then an impact level is calculated by using the respective totals of the calculated absolute values. This calculation focuses on an amount of money, irrespective of plus or minus amount. Therefore, in the first calculation, a calculated impact level is proportional to the number of appearances and also to an amount of money dealt with in update processes.

On the other hand, the second calculation uses both a total of amounts of money corresponding to a transition source activity and a transition destination activity, and a product of a total of amounts of money corresponding to the transition source activity and a total of amounts of money corresponding to the transition destination activity. Having a presumption that a minus amount of money means cancellation of money transaction, the first term of the calculation has an idea of obtaining an index indicating an actual transaction scale by balancing out the plus and minus amounts of money. In the case where there are many update processes for plus amounts of money in a transition source and minus amounts of money in a transition destination, and in the reverse case, a minus amount of money do not always mean cancellation of money transactions, and therefore the second term of the calculation has an idea of reflecting a transaction scale in the impact level to some extent.

In this connection, the coefficients in the first calculation and the second calculation are values for absorbing difference in scale of money between fields. Therefore, these coefficients are previously defined for each process ID according to a tendency of values set in the field. For example, a value "0.1" or "0.005" is defined as a coefficient.

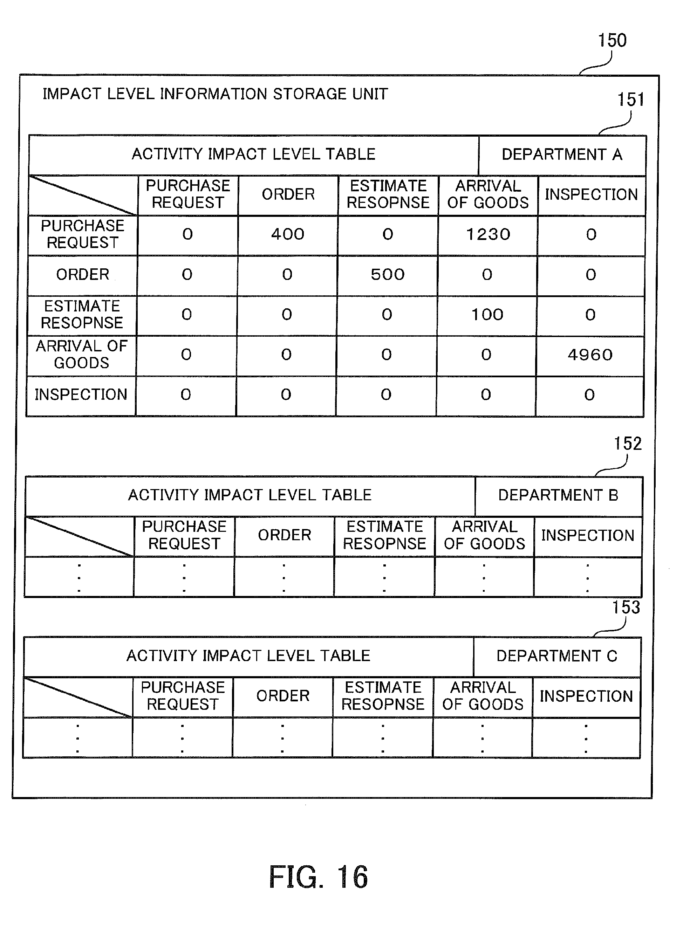

FIG. 16 illustrates an example data structure of activity impact level tables. The activity impact level tables 151, 152, and 153 of FIG. 16 are stored in the impact level information storage unit 150. The activity impact level tables 151, 152, and 153 correspond to the "department A", "department B", and "department C", respectively.

Each of the activity impact level table 151, 152, and 153 lists table names corresponding to transition source activities in line, and lists table names corresponding to transition destination activities in a row. In a crossing column of a transition source activity and a transition destination activity, a numerical value indicative of an impact level of the transition relation is set. The values in the activity impact level tables 151, 152, and 153 are set by the impact level table generator 180. For example, an impact level of a transition relation between a transition source "purchase request" and a transition destination "order" is set to "400".

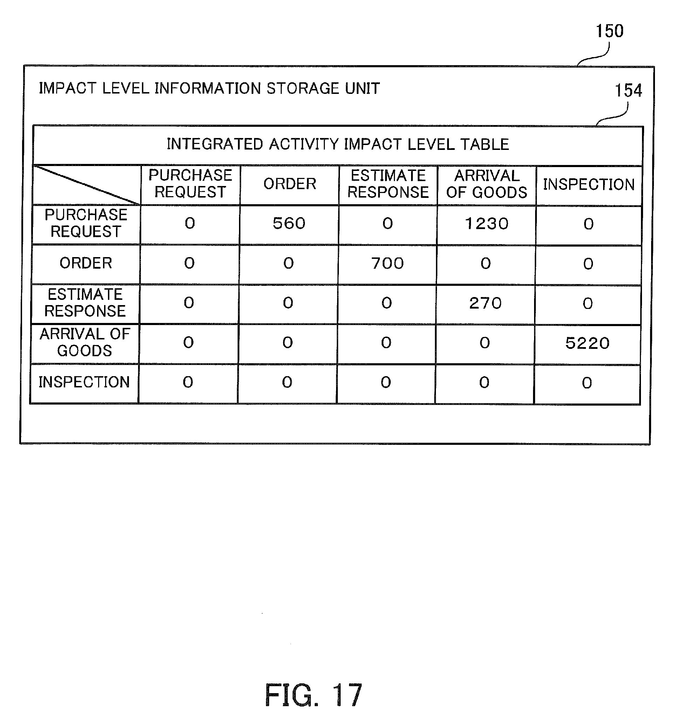

FIG. 17 illustrates an example data structure of an integrated activity impact level table. The integrated activity impact level table 154 of FIG. 17 is stored in the impact level information storage unit 150. The data structure of the integrated activity impact level table 154 is the same as that of the activity impact level tables 151, 152, and 153 of FIG. 16. The integrated activity impact level table 154 describes a total of impact levels contained in the activity impact level tables 151, 152, and 153.

The following describes a display screen to be displayed by the workflow display unit 185 on the monitor 11 after the impact level calculation process is completed.

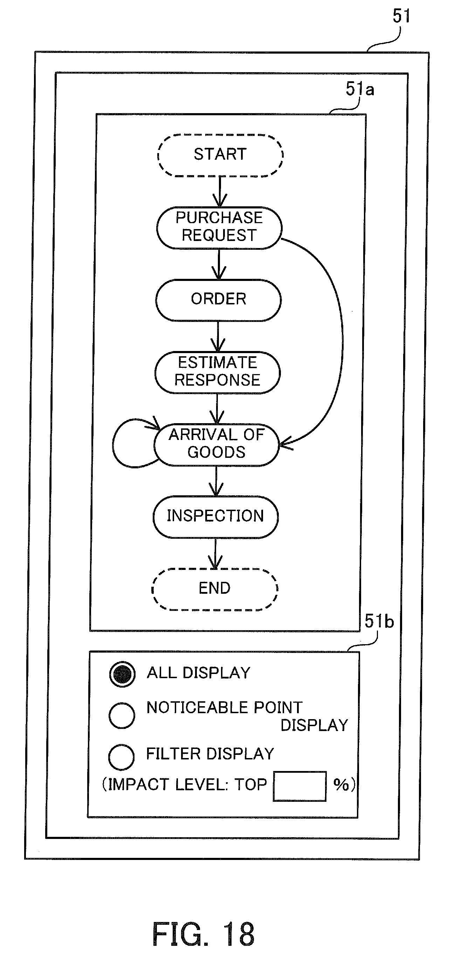

FIG. 18 is a first view illustrating an example display screen of an analysis result. The display screen 51 of FIG. 18 is a screen to be displayed on the monitor 11 right after the impact level calculation process is completed. The display screen 51 has a display region 51a and an operation region 51b.

The display region 51a displays a workflow model. The workflow model is generated based on workflow information stored in the workflow information storage unit 130. More specifically, the workflow model is a visually represented graph in which a table name is represented as a node and a transition relation is represented as a link with an arrow.

In the operation region 51b, three choices are provided, "all display", "noticeable point display", and "filter display". In the initial state, "all display" is selected. Under the "all display", a normal workflow model on which impact level information is not reflected is displayed in the display region 51a.

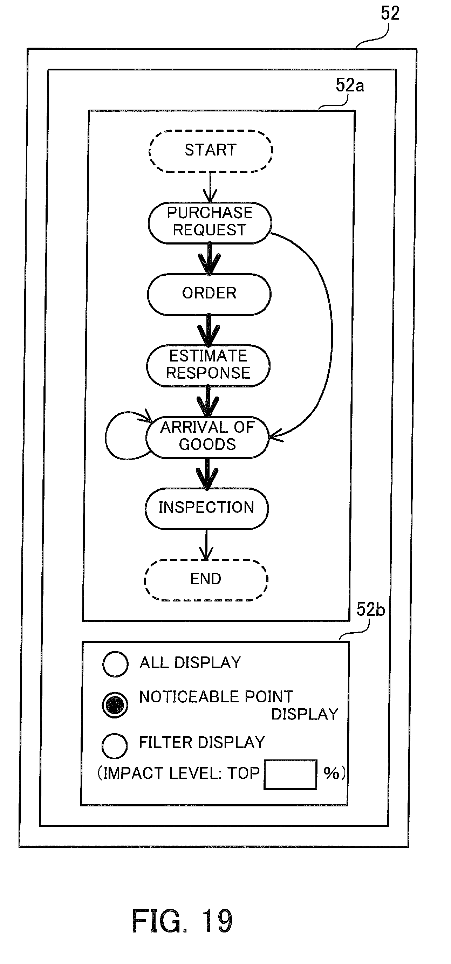

FIG. 19 is a second view of an example display screen of the analysis result. The display screen 52 of FIG. 19 is a screen to be displayed on the monitor 11 when a user selects "noticeable point display" in the operation region 51b of the display screen 51 of FIG. 18. The display screen 52 has a display region 52a and an operation region 52b. The display region 52a and the operation region 52b have the same functions as the display region 5m, 1a and the operation region 51b.

However, under the "noticeable point display", what is displayed in the display region 52a is a workflow model highlighting transition relations with an impact level greater than a predetermined threshold. At this time, as the value of the impact level, a value in the integrated activity impact level table 154 stored in the impact level information storage unit 150 is used. Referring to the example of FIG. 19, transition relations with an impact level greater than "0" are highlighted. A threshold is previously set by the administrator of the workflow analysis device 100.

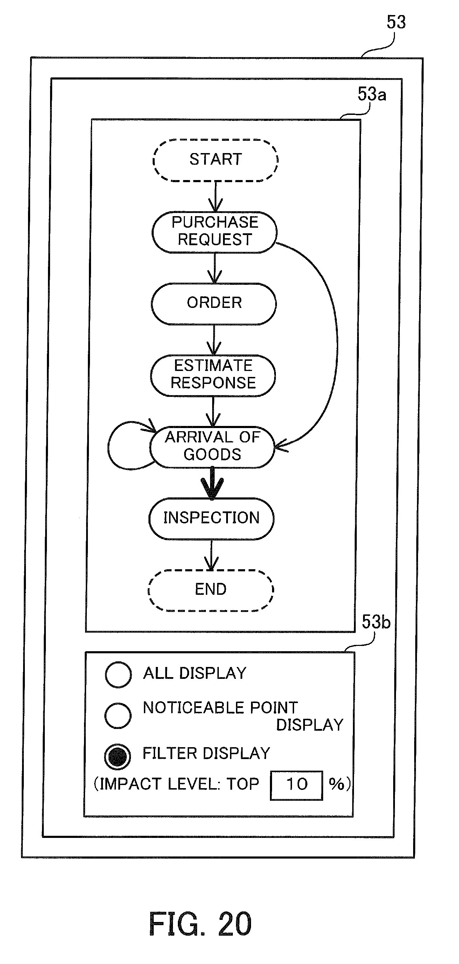

FIG. 20 is a third view of an example display screen of the analysis result. The display screen 53 of FIG. 20 is a screen to be displayed on the monitor 11 when a user selects "filter display" in the operation region 51b of the display screen 51 of FIG. 18 or in the operation region 52b of the display screen 52 of FIG. 19. The display screen 53 has a display region 53a and an operation region 53b, which have the same functions as the display regions 51a and 52a and the operation regions 51b and 52b.

However, if the "filter display" is selected and a desired rate of filtering transition relations in terms of impact level is specified, a workflow model highlighting transition relations with an impact level greater than a threshold calculated based on the desired filtering rate is displayed in the display region 53a. To calculate an impact level threshold based on the filtering rate, for example, the following calculation is used.

$$\text{Impact level threshold} = (\text{maximum impact level} - \text{minimum impact level}) \times (1 - \text{filtering rate} \div 100) + \text{minimum impact level}$$

In this calculation, the maximum and minimum impact levels are the maximum value and the minimum value in the integrated activity impact level table 154 stored in the impact level information storage unit 150. Referring to the example of FIG. 20, "10%" is specified as the filtering rate.

By using such a workflow analysis device 100, an impact level on financial reports can be quantitatively evaluated for each business activity by using update information of databases. Evaluation values represent the actuality. Therefore, bolstering a computer system or revising business manual for improving reliability of financial reports can be effectively and appropriately implemented. In addition, loads on staff in charge can be greatly reduced.

In the embodiment, an impact level is evaluated from the perspective of an internal control relating to financial reports. However, it can be evaluated from some other perspectives. To do so, different fields may be designated by means of control criteria information. In addition, in this embodiment, one field is assigned to one control ID. Alternatively, some fields may be assigned to one control ID so as to extract update information indicating updates of all of these fields.

Further, in the embodiment, an activity impact level table is generated for each department, and then an integrated activity impact level table is generated by aggregating the activity impact level tables of all of the departments. Alternatively, some departments which have little impact on financial reports may be excluded from the aggregation. As a result, an impact level on the entire business can be flexibly obtained, considering various laws and regulations on business activities. As a method for designating a department to be excluded from the aggregation, an administrator may previously set one or a user may designate one in each case.

Still further, in the embodiment, an analysis result is displayed by using an integrated activity impact level table. Alternatively, such an analysis result may be displayed by using an activity impact level table generated for each department. This can point out business activities having high impact on financial reports for each department. In this case, a user may designate a desired department in each case.

Still further, in the embodiment, an impact level is calculated for each transition relation. In addition, an impact level of each workflow may be further calculated by adding up impact levels of transition relations. This can point out workflows having high impact on financial reports.

Still further, in the embodiment, the workflow extraction process, the controlled event extraction process, the transition table generation process, and the impact level table generation process are performed in this order. However, the order of these processes may be changed. For example, the transition table generation process may be performed before the controlled event extraction process. Alternatively, the controlled event extraction process may be performed before the workflow extraction process.

Heretofore, a workflow analysis program and a workflow analysis apparatus according to the present invention have been described by means of illustrated embodiments. This invention is not limited to this and each component may be replaced with a component having the same functions. In addition, other configuration and steps can be desirably added to the invention. In addition, two or more configurations (features) in the above embodiment may be combined.

The processing functions described above can be realized by a computer. In this case, a program is prepared, which describes processes for the functions to be performed by the workflow analysis device 100. The program is executed on a computer, whereupon the aforementioned processing functions are accomplished by the computer. The program describing the required processes may be recorded on a computer-readable recording medium. Computer-readable recording media include magnetic recording devices, optical discs, magneto-optical recording media, semiconductor memories, etc. The magnetic recording devices include Hard Disk Drives (HDD), Flexible Disks (FD), magnetic tapes (MT), etc. The optical discs include DVDs (Digital Versatile Discs), DVD-RAMs, CD-ROMs (Compact Disc Read-Only Memories), CD-R (Recordable)/RW (ReWritable), etc. The magneto-optical recording media include MOs (Magneto-Optical disks) etc.

To distribute the program, portable recording media, such as DVDs and CD-ROMs, on which the program is recorded may be put on sale. Alternatively, the program may be stored in the storage device of a server computer and may be transferred from the server computer to other computers through a network.

A computer which is to execute the above program stores in its storage device the program recorded on a portable recording medium or transferred from the server computer, for example. Then, the computer runs the program. The computer may run the program directly from the portable recording medium. Also, while receiving the program being transferred from the server computer, the computer may sequentially run this program.

The foregoing is considered as illustrative only of the principles of the invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

Description of Reference Numerals

10:     computer
11:     update information storage means
11a:   update information
12:     importance level criteria storage means
12a:   important data item
13:     workflow extractor means

13a: workflow information
14: transition information generator means
14a: transition information
15: important update extractor means
16: impact level calculator means
16a: impact level information

**Claims**

1. A workflow analysis program for causing a computer to analyze a flow of work based on the operational state of computer systems,
wherein the workflow analysis program causes the computer to perform as:

update information storage means which stores update information including an identifier uniquely identifying a business process, an updated time of an updated data set, a set name of the updated data set, and an item name and updated value of a data item updated in the updated data set, the business process involving updates of a plurality of data sets;
importance level criteria storage means which stores a list of important data items which are considered highly important in business from among data items contained in data sets;
workflow extractor means which generates workflow information by arranging set names of updated data sets in chronological order of updated time, oldest first, for each business process based on the update information stored in the update information storage means;
transition information generator means which specifies a transition relation between two continuously updated data sets based on the workflow information generated by the workflow extractor means, and generates transition information indicative of a number of appearances of every transition relation;
important update extractor means which consults the importance level criteria storage means to extract update information indicating updates of the important data items from among the update information stored in the update information storage means, and specifies a correspondence relation between a data set and an updated value of an important data item; and
impact level calculator means which acquires the transition information generated by the transition information generator means and information of the correspondence relation specified by the important update extractor means, calculates an impact level of each transition relation on the business with a predetermined calculation method by using the number of appearances of the each transition relation and updated values corresponding to data sets which are a transition source and a transition destination of the each transition relation, and outputs impact level information indicative of the impact level of every transition relation.

2. The workflow analysis program according to claim 1, wherein the workflow analysis program causes the computer to further perform as workflow display means which generates a workflow model having the set names as nodes and transition relations as links based on the workflow information extracted by the workflow extractor means and the impact level information outputted from the impact level calculator means, and displays the workflow model highlighting links corresponding to transition relations with an impact level greater than a predetermined threshold.

3. The workflow analysis program according to claim 1, wherein:

the important update extractor means extracts the update information and specifies the correspondence relation between the data set and the updated value, for each important data item; and
the impact level calculator means uses a coefficient in the calculation, and takes as the impact level a total of calculation results obtained for the each important data item, the coefficient defined for the each important data item.

4. The workflow analysis program according to claim 1, wherein:

the important data items are selected from among the data items to which a numerical value is set; and
to calculate the impact level, the impact level calculator means uses as the predetermined calculation method a calculation of multiplying a predetermined coefficient, the number of appearances, a total of absolute values of the updated values corresponding to the data sets which are the transition source and the transition destination.

**5.** The workflow analysis program according to claim 1, wherein:

the important data items are selected from among the data items to which a numerical value is set; and
to calculate the impact level, the impact level calculator means uses as the predetermined calculation method a calculation of adding a value obtained by multiplying a predetermined first coefficient, the number of appearances, and a total of the updated values corresponding to the data sets which are the transition source and the transition destination and a value obtained by multiplying a predetermined second coefficient, the number of appearances, a total of the updated values corresponding to the data set of the transition source, and a total of the updated values corresponding to the data set of the transition destination.

**6.** A workflow analysis apparatus for analyzing a flow of work based on the operational state of computer systems, comprising:

update information storage means which stores update information including an identifier uniquely identifying a business process, an updated time of an updated data set, a set name of the updated data set, and an item name and updated value of a data item updated in the updated data set, the business process involving updates of a plurality of data sets;
importance level criteria storage means which stores a list of important data items which are considered highly important in business from among data items contained in data sets;
workflow extractor means which generates workflow information by arranging set names of updated data sets in chronological order of updated time, oldest first, for each business process based on the update information stored in the update information storage means;
transition information generator means which specifies a transition relation between two continuously updated data sets based on the workflow information generated by the workflow extractor means, and generates transition information indicative of a number of appearances of every transition relation;
important update extractor means which consults the importance level criteria storage means to extract update information indicating updates of the important data items from among the update information stored in the update information storage means, and specifies a correspondence relation between a data set and an updated value of an important data item; and
impact level calculator means which acquires the transition information generated by the transition information generator means and information of the correspondence relation specified by the important update extractor means, calculates an impact level of each transition relation on the business with a predetermined calculation method by using the number of appearances of the each transition relation and updated values corresponding to data sets which are a transition source and a transition destination of the each transition relation, and outputs impact level information indicative of the impact level of every transition relation.

**7.** The workflow analysis apparatus according to claim 6, further comprising workflow display means which generates a workflow model having the updated set names as nodes and transition relations as links based on the workflow information extracted by the workflow extractor means and the impact level information outputted from the impact level calculator means, and displays the workflow model highlighting links corresponding to transition relations with an impact level greater than a predetermined threshold.

**8.** The workflow analysis apparatus according to claim 6, wherein:

the important update extractor means extracts the update information and specifies the correspondence relation between the data set and the updated value, for each important data item; and
the impact level calculator means uses a coefficient in the calculation, and takes as the impact level a total of calculation results obtained for the each important data item, the coefficient defined for the each important data item.

**9.** The workflow analysis apparatus according to claim 6, wherein:

the important data items are selected from among the data items to which a numerical value is set; and
to calculate the impact level, the impact level calculator means uses as the predetermined calculation method a calculation of multiplying a predetermined coefficient, the number of appearances, a total of absolute values of the updated values corresponding to the data sets which are the transition source and the transition destination.

**10.** The workflow analysis apparatus according to claim 6, wherein:

the important data items are selected from among the data items to which a numerical value is set; and
to calculate the impact level, the impact level calculator means uses as the predetermined calculation method a calculation of adding a value obtained by multiplying a predetermined first coefficient, the number of appearances, and a total of the updated values corresponding to the data sets which are the transition source and the transition destination and a value obtained by multiplying a predetermined second coefficient, the number of appearances, a total of the updated values corresponding to the data set of the transition source, and a total of the updated values corresponding to the data set of the transition destination.

FIG. 1

DATABASE
SERVER
200

DATABASE
SERVER
200a

300

40

NETWORK

APPLICATION
SERVER

300a

100

APPLICATION
SERVER

300b

WORKFLOW
ANALYSIS
DEVICE

APPLICATION
SERVER

# FIG. 2

100

WORKFLOW ANALYSIS DEVICE

101

CPU

102

RAM

103

HDD

104

GRAPHICS
PROCESSOR

105

INPUT DEVICE
INTERFACE

106

COMMUNI-
CATION
INTERFACE

107 BUS

11 MONITOR

12

KEYBOARD

13 MOUSE

40

NETWORK

FIG. 3

FIG. 4

DATE AND TIME, TABLE NAME, PROCESS ID, EXECUTANT, FIELD

---------------------------------------------

09/04/2006 09:08:48, PURCHASE REQUEST, 011, DEPARTMENT A, ESTIMATED AMOUNT =10,000

09/04/2006 09:09:08, PURCHASE REQUEST, 021, DEPARTMENT B, ESTIMATED AMOUNT=123,000

09/08/2006 16:51:22, ORDER, 011, DEPARTMENT A, ORDER AMOUNT=10,000;YEN EQUIVALENT =10,000

09/09/2006 15:38:51, ESTIMATE RESPONSE, 011, DEPARTMENT A, ESTIMATED AMOUNT=10,000

09/10/2006 10:11:29, ARRIVAL OF GOODS, 021, DEPARTMENT B, EXPENSE=2,100

09/11/2006 10:11:29, PURCHASE REQUEST, 012, DEPARTMENT A, ESTIMATED AMOUNT=30,000

:

# FIG. 5

EP 2 124 176 A1

## UPDATE INFORMATION STORAGE UNIT 111

| UPDATE INFORMATION TABLE | | | DEPARTMENT A |
|---|---|---|---|
| DATE AND TIME | TABLE NAME | PROCESS ID | FIELD |
| 2006/09/04 09:08:48 | PURCHASE REQUEST | 011 | ESTIMATED AMOUNT=10,000 |
| 2006/09/08 16:51:22 | ORDER | 011 | ORDER AMOUNT=10,000; YEN EQUIVALENT =10,000 |
| 2006/09/09 15:38:51 | ESTIMATE RESPONSE | 011 | ESTIMATED AMOUNT=10,000 |
| 2006/09/11 10:11:29 | PURCHASE REQUEST | 012 | ESTIMATED AMOUNT=30,000 |
| : | : | : | : |

112

| UPDATE INFORMATION TABLE | | | DEPARTMENT B |
|---|---|---|---|
| DATE AND TIME | TABLE NAME | PROCESS ID | FIELD |
| : | : | : | : |

113

| UPDATE INFORMATION TABLE | | | DEPARTMENT C |
|---|---|---|---|
| DATE AND TIME | TABLE NAME | PROCESS ID | FIELD |
| : | : | : | : |

110

# FIG. 6

23

120

CONTROL CRITERIA STORAGE UNIT

121

| CONTROL CRITERIA TABLE | |
|---|---|
| CONTROL ID | FIELD NAME |
| #01 | ESTIMATED AMOUNT |
| #02 | ORDER AMOUNT |
| #03 | YEN EQUIVALENT |
| #04 | CONTRACT AMOUNT |
| ⋮ | ⋮ |

FIG. 7

IMPACT LEVEL
CALCULATION PROCESS

EXTRACT WORKFLOW — S10

EXTRACT
CONTROLLED EVENT — S20

GENERATE
TRANSITION TABLE — S30

GENERATE IMPACT
LEVEL TABLE — S40

END

# FIG. 8

FIG. 9

130

WORKFLOW INFORMATION STORAGE UNIT

131

| WORKFLOW TABLE | DEPARTMENT A |
|---|---|
| ACTIVITY SEQUENCE | THE NUMBER OF APPEARANCES |
| PURCHASE REQUEST → ORDER → ESTIMATE RESPONSE → ARRIVAL OF GOODS → INSPECTION | 100 |
| PURCHASE REQUEST → ARRIVAL OF GOODS→INSPECTION | 50 |
| PURCHASE REQUEST → ARRIVAL OF GOODS→ARRIVAL OF GOODS→INSPECTION | 40 |
| ⋮ | ⋮ |

132

| WORKFLOW TABLE | DEPARTMENT B |
|---|---|
| ACTIVITY SEQUENCE | THE NUMBER OF APPEARANCES |
| ⋮ | ⋮ |

133

| WORKFLOW TABLE | DEPARTMENT C |
|---|---|
| ACTIVITY SEQUENCE | THE NUMBER OF APPEARANCES |
| ⋮ | ⋮ |

# FIG. 10

CONTROLLED EVENT
EXTRACTION PROCESS

S21
SELECT ONE DEPARTMENT

S22
SELECT ONE PIECE OF
UPDATE INFORMATION

S23
SELECT ONE CONTROL ID

S24
IS
UPDATE OF
CORRESPONDING FIELD
INDICATED
?

NO

YES

S25
DETERMINE CORRESPONDING
UPDATE PROCESS AS
CONTROLLED EVENT

S26
HAVE
ALL CONTROL IDs BEEN
SELECTED?

NO

YES

S27
HAVE ALL
UPDATE INFORMATION
BEEN SELECTED?

NO

YES

S28
HAVE
ALL DEPARTMENTS BEEN
SELECTED?

NO

YES

END

FIG. 11

140

CONTROL INFORMATION STORAGE UNIT

141a 141b ...

| CONTROLLED EVENT TABLE | DEPARTMENT A | ID#01 |
|---|---|---|
| DATE AND TIME | ACTIVITY | AMOUNT OF MONEY |
| 09/04/2006 09:08:48 | PURCHASE REQUEST | 10,000 |
| 09/09/2006 15:38:51 | ESTIMATE RESPONSE | 10,000 |
| 09/11/2006 10:11:29 | PURCHASE REQUEST | 30,000 |
| ⋮ | ⋮ | ⋮ |

142a 142b ...

| CONTROLLED EVENT TABLE | DEPARTMENT B | ID#01 |
|---|---|---|
| DATE AND TIME | ACTIVITY | AMOUNT OF MONEY |
| ⋮ | ⋮ | ⋮ |

143a 143b ...

| CONTROLLED EVENT TABLE | DEPARTMENT C | ID#01 |
|---|---|---|
| DATE AND TIME | ACTIVITY | AMOUNT OF MONEY |
| ⋮ | ⋮ | ⋮ |

FIG. 12

```
      ┌─────────────────────────┐
      │   TRANSITION TABLE      │
      │  GENERATION PROCESS     │
      └───────────┬─────────────┘
                  │
      ┌───────────▼─────────────┐  S31
      │      SELECT ONE         │
      │      DEPARTMENT         │
      └───────────┬─────────────┘
                  │
      ┌───────────▼─────────────┐  S32
      │  INITIALIZE TRANSITION  │
      │         TABLE           │
      └───────────┬─────────────┘
                  │
      ┌───────────▼─────────────┐  S33
      │   SELECT ONE WORKFLOW   │
      └───────────┬─────────────┘
                  │
      ┌───────────▼─────────────┐  S34
      │      SELECT ONE         │
      │   TRANSITION RELATION   │
      └───────────┬─────────────┘
                  │
      ┌───────────▼─────────────┐  S35
      │   ADD THE NUMBER OF     │
      │     APPEARANCES IN      │
      │   TRANSITION TABLE      │
      └───────────┬─────────────┘
                  │
                  ▼             S36
              ╱───────────╲        NO
             ╱    HAVE      ╲──────────
            ╱ ALL RELATIONS  ╲
            ╲   BEEN          ╱
             ╲ SELECTED?     ╱
              ╲───────────╱
                  │ YES
                  ▼             S37
              ╱───────────╲
     NO      ╱    HAVE      ╲
   ─────────╱  ALL FLOWS     ╲
            ╲   BEEN          ╱
             ╲ SELECTED?     ╱
              ╲───────────╱
                  │ YES
                  ▼             S38
              ╱───────────╲
     NO      ╱  HAVE ALL    ╲
   ─────────╱  DEPARTMENTS   ╲
            ╲   BEEN          ╱
             ╲ SELECTED?     ╱
              ╲───────────╱
                  │ YES
                  ▼
            ┌───────────┐
            │    END    │
            └───────────┘
```

FIG. 13

130

WORKFLOW INFORMATION STORAGE UNIT                    134

| ACTIVITY TRANSITION TABLE | | | | DEPARTMENT A | |
|---|---|---|---|---|---|
| | PURCHASE REQUEST | ORDER | ESTIMATE RESPONSE | ARRIVAL OF GOODS | INSPECTION |
| PURCHASE REQUEST | 0 | 170 | 0 | 100 | 0 |
| ORDER | 0 | 0 | 170 | 0 | 0 |
| ESTIMATE RESPONSE | 0 | 0 | 0 | 170 | 0 |
| ARRIVAL OF GOODS | 0 | 0 | 0 | 130 | 140 |
| INSPECTION | 0 | 0 | 0 | 0 | 0 |

135

| ACTIVITY TRANSITION TABLE | | | | DEPARTMENT B | |
|---|---|---|---|---|---|
| | PURCHASE REQUEST | ORDER | ESTIMATE RESPONSE | ARRIVAL OF GOODS | INSPECTION |
| : | : | : | : | : | : |

136

| ACTIVITY TRANSITION TABLE | | | | DEPARTMENT C | |
|---|---|---|---|---|---|
| | PURCHASE REQUEST | ORDER | ESTIMATE RESPONSE | ARRIVAL OF GOODS | INSPECTION |
| : | : | : | : | : | : |

FIG. 14

IMPACT LEVEL
GENERATION PROCESS

SELECT ONE DEPARTMENT  S41

INITIALIZE IMPACT LEVEL
TABLE  S42

SELECT ONE TRANSITION  S43

SELECT CONTROL ID  S44

EXTRACT TRANSITION
SOURCE EVENT  S45

EXTRACT TRANSITION
DESTINATION EVENT  S46

ADD IMPACT LEVEL IN
IMPACT LEVEL TABLE  S47

S48
HAVE
ALL CONTROL IDs BEEN
SELECTED?
NO

YES

S49
HAVE
ALL TRANSITIONS BEEN
SELECTED?
NO

YES

S50
HAVE ALL
DEPARTMENTS BEEN
SELECTED?
NO

YES

AGGREGATE TABLES OF
ALL DEPARTMENTS  S51

END

FIG. 15

150

IMPACT LEVEL INFORMATION STORAGE UNIT 151

| ACTIVITY IMPACT LEVEL TABLE | | | | | DEPARTMENT A |
|---|---|---|---|---|---|
| | PURCHASE REQUEST | ORDER | ESTIMATE RESOPNSE | ARRIVAL OF GOODS | INSPECTION |
| PURCHASE REQUEST | O | 400 | O | 1230 | O |
| ORDER | O | O | 500 | O | O |
| ESTIMATE RESOPNSE | O | O | O | 100 | O |
| ARRIVAL OF GOODS | O | O | O | O | 4960 |
| INSPECTION | O | O | O | O | O |

152

| ACTIVITY IMPACT LEVEL TABLE | | | | | DEPARTMENT B |
|---|---|---|---|---|---|
| | PURCHASE REQUEST | ORDER | ESTIMATE RESOPNSE | ARRIVAL OF GOODS | INSPECTION |
| ⋮ | ⋮ | ⋮ | ⋮ | ⋮ | ⋮ |

153

| ACTIVITY IMPACT LEVEL TABLE | | | | | DEPARTMENT C |
|---|---|---|---|---|---|
| | PURCHASE REQUEST | ORDER | ESTIMATE RESOPNSE | ARRIVAL OF GOODS | INSPECTION |
| ⋮ | ⋮ | ⋮ | ⋮ | ⋮ | ⋮ |

FIG. 16

150

IMPACT LEVEL INFORMATION STORAGE UNIT                                         154

| INTEGRATED ACTIVITY IMPACT LEVEL TABLE | | | | | |
|---|---|---|---|---|---|
| | PURCHASE REQUEST | ORDER | ESTIMATE RESPONSE | ARRIVAL OF GOODS | INSPECTION |
| PURCHASE REQUEST | 0 | 560 | 0 | 1230 | 0 |
| ORDER | 0 | 0 | 700 | 0 | 0 |
| ESTIMATE RESPONSE | 0 | 0 | 0 | 270 | 0 |
| ARRIVAL OF GOODS | 0 | 0 | 0 | 0 | 5220 |
| INSPECTION | 0 | 0 | 0 | 0 | 0 |

# FIG. 17

FIG. 18

FIG. 19

FIG. 20

## INTERNATIONAL SEARCH REPORT

| | International application No. |
|---|---|
| | PCT/JP2007/055277 |

**A.   CLASSIFICATION OF SUBJECT MATTER**
*G06Q10/00(2006.01)i*

According to International Patent Classification (IPC) or to both national classification and IPC

**B.   FIELDS SEARCHED**

Minimum documentation searched (classification system followed by classification symbols)
G06Q10/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| A | JP 2005-071113 A  (Toshiba Corp.), 17 March, 2005 (17.03.05), Full text; Figs. 1 to 10 (Family: none) | 1-10 |
| A | JP 2002-352064 A  (Matsushita Electric Works, Ltd.), 06 December, 2002 (06.12.02), Full text; Figs. 1 to 41 (Family: none) | 1-10 |
| A | JP 2006-172278 A  (Hitachi, Ltd.), 29 June, 2006 (29.06.06), Full text; Figs. 1 to 15 (Family: none) | 1-10 |

| ☒   Further documents are listed in the continuation of Box C. | ☐   See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 April, 2007 (19.04.07) | 01 May, 2007 (01.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## INTERNATIONAL SEARCH REPORT

International application No.

PCT/JP2007/055277

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-348588 A (Sony Corp.), 09 December, 2004 (09.12.04), Full text; Figs. 1 to 52 (Family: none) | 1-10 |

Form PCT/ISA/210 (continuation of second sheet) (April 2005)

**EP 2 124 176 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005071113 A